# EUROPEAN PATENT SPECIFICATION

(11) **EP 0 666 022 B1**
(45) Date of publication and mention of the grant of the patent: **09.06.1999**
(21) Application number: 95300687.1
(22) Date of filing: 03.02.1995
(51) Int. Cl.: A01G 1/04

(54) **Growing medium block**
Blockförmiges Zuchtmedium
Milieu de culture en forme de bloc

(30) Priority: 05.02.1994 GB 9402250
(43) Date of publication of application: 09.08.1995
(73) Proprietor: Tunnel Tech Ltd., Stockbridge, Hampshire SO20 6JF (GB)
(72) Inventor: Barrett, Rodney, c/o Tunnel Tech Ltd., Stockbridge, Hampshire SO20 6JF (GB)
(74) Representative: Davies, Christopher Robert

(56) References cited:
- EP-A- 0 331 346
- EP-A- 0 414 330
- NL-A- 9 300 859
- US-A- 3 788 003

## Description

The present invention relates to a growing medium block and to a method of its manufacture. The block is particularly though not exclusively intended for growing mushrooms.

Mushroom growing compost units are presently restricted to a size which can be manually handled. The conventional system is to provide the compost in bags containing 20kg of compost. A severe problem with this is the disposal of the bags which are generally of plastics material.

It is also known to arrange a number of prefabricated compost blocks close together to provide a larger growing surface area; however a problem with juxtaposing blocks is that the compost may overheat.

From European Patent Specification No. 331,346, over which independent claim 1 is characterised, it is known to juxtapose a number of rectangular blocks, generally four with a width a quarter of their length, to provide a bale which is square. To avoid overheating, the individual blocks have wider upper surfaces than their lower surfaces to provide air vents between the side surfaces of the blocks. The blocks are assembled into the final bale configuration directly onto shelves which will support the compost during growing of the mushrooms, the assembly being supplied directly from a pressing machine for making the blocks.

Such a bale or its individual blocks are not readily transportable from a pressing machine site to a remote growing site, which mitigates against use of the juxtaposed block bales when mass production of the blocks is contemplated.

An object of the invention is to provide more readily transportable compost blocks.

According to one aspect of the invention there is provided a growing medium block having at least one air passage opening into the base of the block, characterised in that the air passage has a narrow section and an upper section above the narrow section whose maximum width is greater than the width of the narrow section.

In this invention there are provided air passages in the blocks which have a cross-section including a narrow section and an upper section whose maximum width is greater than the width of the narrow section. This shape renders the compost self supporting around the air passage.

The blocks are preferably made by extrusion which leaves the lateral sides with a self supporting structure. The individual blocks are cut off when sufficient length has been extruded. To render the cut edges self supporting, the compost is cut with a wedge shaped knife.

Preferably, the upper section tapers out in width from above the narrow section to a maximum width and tapers backs in from the maximum width. The very top of each air passage is conveniently flat, but can be domed. Optionally, there may be provided a lower section below the narrow section extending from the narrow section to the bottom surface of the block. The lower section may optionally taper out in width from the narrow section to the bottom surface of the block.

It is preferred that the cut edges of the block have compression indentations formed by the cutting knife, as this folds the straws and fibres preventing flaking off of compost.

According to another aspect of the invention there is provided a method of extruding a growing medium block including the step of forming at least one air passage opening into the base of the block, the passage having a narrow section and an upper section above the narrow section whose maximum width is greater than the width of the narrow section, by passing the medium along an extrusion chamber having longitudinally arranged formers having a narrow section and an upper section whose maximum width is greater than the width of the narrow section, the formers being secured adjacent the floor of the extrusion chamber.

Preferably the formers have longitudinally tapered noses to compress the growing medium at the side walls of the air passages, whereby they retain their shape. At the formers, the roof of the extrusion chamber may taper upwards in the direction of extrusion to allow for displacement of the medium as it passes the formers. This also allows for adjustments to be made in density of the blocked compost.

It is preferred to cut the extruded blocks from each other with a wedge shaped knife, to compress the cut edges. To give the cut edges additional compression, the knife preferably has lateral ribs, aligned with the direction of its cutting movement.

Conveniently, the cut blocks may be pushed onto transport pallets from the extrusion machine. They can be left on the pallets during use of the blocks, or destacked directly onto the floor, or racking, at the growing room. A number of blocks can be transported on one pallet. However, in a preferred form, the blocks may be sufficiently self-supporting that pallets are not required, either during transport or use.

The pallets are preferably recyclable, being of sterilisable material, conveniently of plastics.

For mushroom culture, the growing medium is conventionally of straw and chicken manure, with mycelium incorporated.

To help understanding of the invention, a specific embodiment thereof will now be described with reference to the accompanying drawings in which:
Figure 1 is a perspective view of a mushroom compost block according to the invention and
Figure 2 is a diagrammatic perspective view of a machine for producing the compost block of Figure 2.

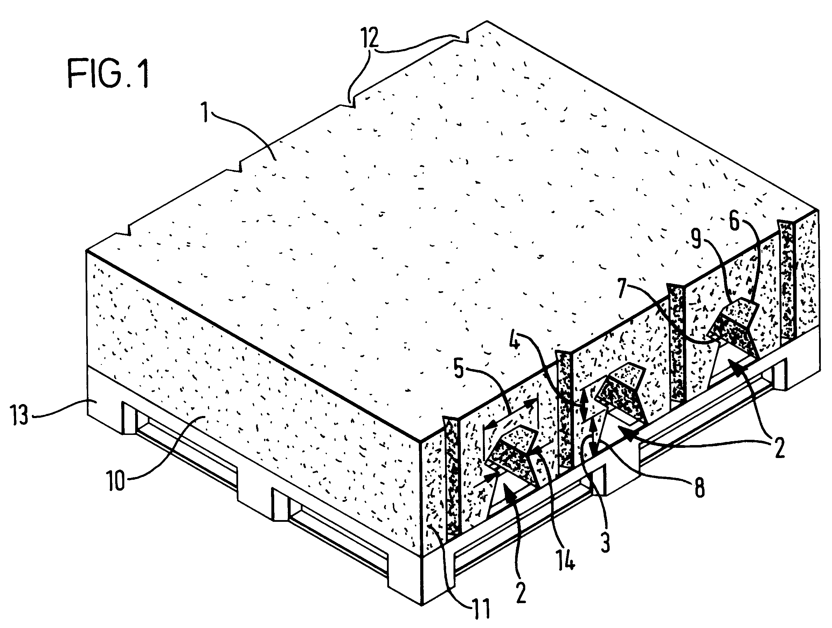

As shown in Figure 1, a mushroom compost block 1 according to my invention has a number, three as shown, of air passages 2, which have a cross-section such that they have a lower section 3 and an upper section 4. Between the upper and lower sections is a narrow section 14. The upper section 4 tapers out in width from above the narrow section to a maximum width 5 and tapers back in from the maximum width. The regions of taper have flat sides 6,7 & 8, or at least the sides are flat as extruded, although they may deform slightly after extrusion as the compost expands slightly from its compressed shape in which it is extruded. The very top 9 of each air passage is flat. Below the width of the narrow section, the cross-section of the passage tapers out to a bottom width equal to the maximum width. The air passages have in effect a "headed" cross-section shape.

The shaping of the air passages causes the compost material to be compressed to an extent that it is self supporting after extrusion. It is anticipated that a plain, non-headed cross-sectional shape would tend to collapse, if not in transport of the block, during subsequent use.

In the preferred embodiment, the extruded width of the block is 1200mm and its height is variable. The height of the block is in practice variable from 350mm down to 220mm, depending on the requirement of the growing system and type of compost used.

The air passage ways can also be variable in size so that alterations to cope with changes in climate can be easily made. This may be achieved, for example, by interchangeable formers. Normally, the air passages have a height of 190mm and a maximum/bottom width of 155mm. With a maximum gap of 170mm between the central passage and its neighbours, they have a minimum gap of 200mm from the edges 10 of the block. It has been determined that this configuration is suitable for cooling the block by conventional mushroom house air circulation (to avoid its temperature rising above the 30°C accepted maximum temperature for mushroom culture).

The side edges 10 of the block are plain and 1000mm long in the case of the dimensions just discussed. This dimension can be readily varied with no set limits.

The cut edges 11 of the block have four equally spaced V notches 12 formed in them as explained further below. They have a depth of 30mm and assist in compression of the cut edges to render them self supporting.

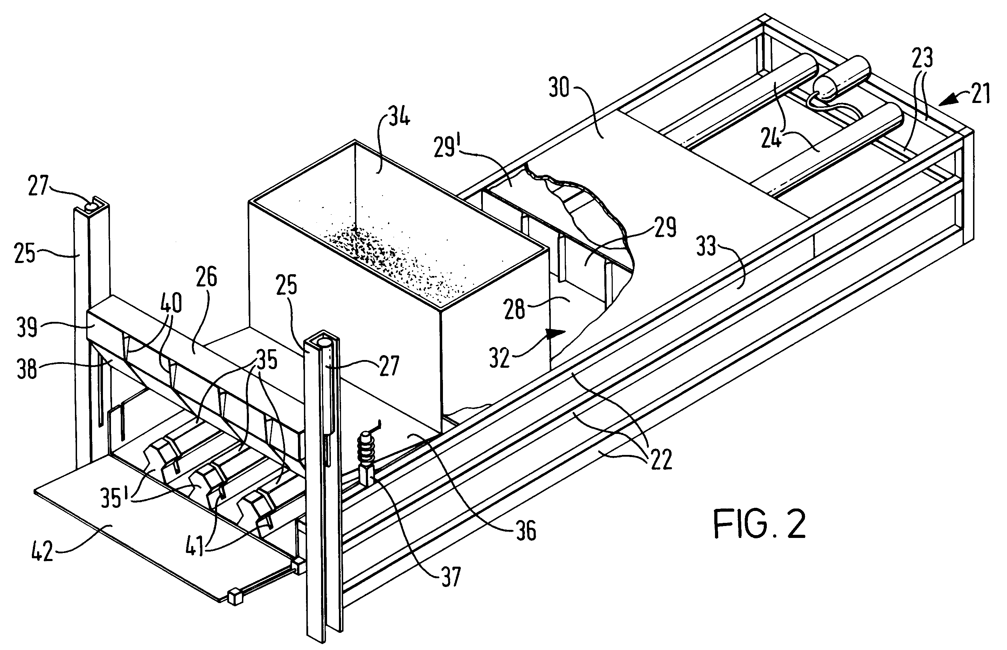

Turning now to Figure 2, there is shown a baling or extrusion machine for making the block shown in Figure 1. It has a tubular steel frame work 21, comprising at each side three longitudinals 22 across the rear end of which extend support members 23 for hydraulic extrusion rams 24. Opposite the members 23, the longitudinals are welded to guillotine-support channels 25. A guillotine knife 26 - described in more detail below - extends between the two channels and is movable up and down them by respective rams 27. Between the middle ones of the three longitudinals 22 a plate steel floor 28 extends.

The extrusion rams have an extrusion blade 29 arranged to be driven forwards over a middle section of the floor, which can be seen in Figure 2 through a partially cut-away plate steel ceiling 30 to the extrusion passage or chamber 32. Side plates 33 between the upper two of the longitudinals 22 at each side enclose the extrusion chamber. The ceiling plate 30 has a cutout at a hopper 34 via which compost for compression is fed into the extrusion chamber. No ceiling is necessary behind the hopper, however, which enables ease of cleaning of the machine. The stroke of the extrusion rams 24 is such that the extrusion blade passes completely under the hopper. To avoid compost falling behind the extrusion blade 29, this has a horizontal rear extension 29. A non-shown blade at the rear edge of the hopper engages this plate to sweep any compost falling onto the plate off it to fall in front of the blade 29 during its return stroke.

On the floor 28 on the opposite side of the hopper from the rams 24, there are secured three air passage formers 35. They are fabricated of steel plate and have exactly the shape of the air passages which they form in the block - as described above - except that they taper to points at the hopper end of them. The portion 36 of the ceiling 30 above the formers 35 can be adjusted up or down to control the amount of compression required. The actual movement of the ceiling portion 36 is controllable by means of an adjustable down-holder 37, the portion 36 being hingedly connected to the foot of the hopper.

In operation, compost is fed continuously into the hopper. The extrusion ram is also stroked forwards and back continuously. Most of the compost in the hopper is forced into the extrusion chamber, although some wells up in front of and over the top of the extrusion blade, whence it is scraped back on the return stroke of the ram. The normal stroke of the ram is the extent of the hopper, i.e. 700mm. The action of the extrusion ram in forcing the compost along the extrusion chamber at the formers is to compress the compost material sideways and upwards (to a lesser extent as permitted by the roof portion 36). The compression tends to move the fibres of the compost with respect to each other around the formers, whereby they take up a self supporting structure. The ceiling portion 36 controls the density and compression required.

It has been determined that a density of approximately 825 kg/m³ is suitable, however higher densities are possible using this system. This is not only considerably higher than the conventional density of "bag system" compost, but also higher than the 770 kg/m³ recommended in EP-A-331,346 referred to above.

The extruded block remains attached to the compressed compost still in the extrusion chamber. It is separated by the guillotine knife 26. This has a tapered lower section 38 and a parallel sided upper section 39, whose width is 150mm and exerts compression in separating the extruded block. The front and back faces have V formations 40 on them, in the form of welded-on tapered-cut angle. These locally exert extra compression on the compost material to provide the V notches 12. (Similar formations are provided on the extrusion blade 29). To support the compost during cutting, the air passage formers 35 extend beyond the cutting plane of the knife 26 and have gaps 41 to allow the knife to completes its stroke without fouling the formers.

After leaving the end 35' of the formers 35 beyond the gaps 41, a cut block is pushed by the next block onto a plate 42, which is in effect a continuation of the floor 28. Thence it is pushed onto a pallet 13 (as shown in Figure 1) or onto the top of another block if required. It is possible for four or more blocks to sit on one pallet for transporting if desired. The pallet is initially under the plate 42 and arranged such that as the block is pushed forwards, the pallet moves forward with it until the block is largely supported on the pallet. The pallet is withdrawn with the block or blocks. Each block can weigh up to 350kg and can be readily lifted by fork-left truck. The completed block can then be loaded for transport and in fact stacked four high (with or without pallets) without deterioration of the lowest block. In a preferred form, the block or blocks may be sufficiently self-supporting that no pallet is required at all.

When a production run of blocks of a particular compost has been finished, to clear the extrusion chamber, the hopper 34 is removed and the ram withdrawn. A non-illustrated pusher, having a shape complementary to formers, is placed at the mouth of the chamber and forced through it with the ram. With the chamber cleared, the machine can then be completely cleaned.

When the blocks are used, they can be placed adjoining each other, so that a peat capping can be mechanically spread along a line of blocks. In such a line, the air passages are arranged transversely of the line to allow free flow of air through them, but there are a number of ways that blocks can be successfully grown, dependent on the farm and layout of the buildings and air conditioning.

## Claims

1. A growing medium block (1) having at least one air passage (2) opening into the base of the block, characterised in that the air passage has a narrow section (14) and an upper section (4) above the narrow section whose maximum width (5) is greater than the width of the narrow section.

2. A growing medium block as claimed in claim 1 wherein the upper section (4) tapers out in width from above the narrow section (14) to the maximum width (5) and tapers back in from the maximum width.

3. A growing medium block as claimed in claim 2 wherein the top (9) of each passage is flat.

4. A growing medium block as claimed in claim 1, 2 or 3 wherein the air passage has a lower section (3) below the narrow section.

5. A growing medium block as claimed in claim 4 wherein the lower section tapers out in width from the narrow section to the bottom surface of the block.

6. A growing medium block as claimed in any preceding claim wherein the block has cut edges (11).

7. A growing medium block as claimed in claim 6 wherein the cut edges have compression indentations (12) formed during cutting.

8. A growing medium block as claimed in any preceding claim wherein the lateral sides (10) of the block have a self-supporting structure.

9. A growing medium block as claimed in any preceding claim wherein the growing medium comprises straw, chicken manure and mycelium.

10. A growing medium block as claimed in any preceding claim and being formed by extrusion.

11. A method of extruding a growing medium block including the step of forming at least one air passage (2) opening into the base of the block, the passage having a narrow section (14) and an upper section (4) above the narrow section whose maximum width (5) is greater than the width of the narrow section, by passing the medium along an extrusion chamber (32) having at least one longitudinally arranged former (35) having a narrow section and an upper section whose maximum width is greater than the width of the narrow section, the former being secured adjacent the floor (28) of the extrusion chamber.

12. Apparatus for extruding a growing medium block having at least one air passage (2) opening into the base of the block, the passage having a narrow section (14) and an upper section (4) above the narrow section whose maximum width (5) is greater than the width of the narrow section, comprising an extrusion chamber (32), at least one longitudinally arranged former (35) having a narrow section and an upper section above the narrow section whose maximum width is greater than the width of the narrow section, the former being secured adjacent the floor (28) of the extrusion chamber, means (34) for supplying the growing medium to the extrusion chamber and means (29) for urging the medium along the chamber.

13. Apparatus as claimed in claim 13 further comprising a knife (26) for cutting the extruded medium into blocks, the knife having lateral ribs (40) aligned with the direction of its cutting movement to provide additional compression to the cut edges.

14. Apparatus as claimed in claim 12 or 13 wherein the formers (35) have longitudinally tapered noses on their ends to compress the medium at the side walls of the air passages during extrusion.

15. Apparatus as claimed in claim 12, 13 or 14 wherein the extrusion chamber further comprises a roof (30, 36) which tapers upwards in the direction of extrusion and is adjustable to control the density of the medium.

## Patentansprüche

1. Zuchtmediumblock (1) mit wenigstens einem in der Grundfläche des Blocks mündenden Luftdurchgang (2), dadurch gekennzeichnet, daß der Luftdurchgang einen schmalen Abschnitt (14) und einen oberen Abschnitt (4) oberhalb des schmalen Abschnitts aufweist, dessen Maximalbreite (5) größer als die Breite des schmalen Abschnitts ist.

2. Zuchtmediumblock nach Anspruch 1, bei welchem der obere Abschnitt (4) sich in seiner Breite von dem schmalen Abschnitt (14) zu der Maximalbreite (5) verbreitert und sich von der Maximalbreite aus wieder verjüngt.

3. Zuchtmediumblock nach Anspruch 2, bei welchem die Oberseite (9) jedes Durchgangs flach ausgebildet ist.

4. Zuchtmediumblock nach Anspruch einem der Ansprüche 1, 2 oder 3, bei welchem der Luftdurchgang einen unteren Abschnitt (3) unterhalb des schmalen Abschnitts aufweist.

5. Zuchtmediumblock nach Anspruch 4, bei welchem der untere Abschnitt sich in seiner Breite von dem schmalen Abschnitt zu der unteren Fläche des Blocks hin erweitert.

6. Zuchtmediumblock nach einem der vorstehenden Ansprüche, bei welchem der Block geschnittene Kanten (11) aufweist.

7. Zuchtmediumblock nach Anspruch 6, bei welchem die geschnittenen Kanten Kompressionseinkerbungen (12), welche während des Schneidens geformt sind, aufweisen.

8. Zuchtmediumblock nach einem der vorstehenden Ansprüche, bei welchem die seitlichen Seiten (10) des Blocks eine selbsthalternde Struktur aufweisen.

9. Zuchtmediumblock nach einem der vorstehenden Ansprüche, bei welchem das Zuchtmedium Stroh, Geflügeldung und Myzelium aufweist.

10. Zuchtmediumblock nach einem der vorstehenden Ansprüche, welcher durch Extrusion geformt ist.

11. Verfahren zum Extrudieren eines Zuchtmediumblocks mit dem Schritt der Bildung wenigstens eines in der Grundfläche des Blocks mündenden Luftdurchgangs (2), wobei der Durchgang einen schmalen Abschnitt (14) und einen oberen Abschnitt (4) oberhalb des schmalen Abschnitts aufweist, dessen Maximalbreite (5) größer als die Breite des schmalen Abschnitts ist, durch Durchführung des Mediums entlang einer Extrusionskammer (32) mit wenigstens einem in Längsrichtung angeordneten Former (35) mit einem schmalen Abschnitt und einem oberen Abschnitt, dessen Maximalbreite größer als die Breite des schmalen Abschnitts ist, wobei der Former benachbart zu dem Boden (28) der Extrusionskammer gesichert bzw. befestigt ist.

12. Vorrichtung zum Extrudieren eines Zuchtmediumblocks mit wenigstens einem in der Grundfläche des Blocks mündenden Luftdurchgang (2), wobei der Durchgang einen schmalen Abschnitt (14) und einen oberen Abschnitt (4) oberhalb des schmalen Abschnitts aufweist, dessen Maximalbreite (5) größer als die Breite des schmalen Abschnitts ist, wobei die Vorrichtung aufweist: eine Extrusionskammer (32), wenigstens einen in Längsrichtung angeordneten Former mit einem schmalen Abschnitt und einem oberen Abschnitt oberhalb des schmalen Abschnitts, dessen Maximalbreite größer als die Breite des schmalen Abschnitts ist, wobei der Former benachbart zu dem Boden (28) der Extrusionskammer befestigt bzw. gehaltert ist, Mittel (34) zur Zufuhr des Zuchtmediums zu der Extrusionskammer und Mittel (29) zum Drängen des Mediums entlang der Kammer.

13. Vorrichtung nach Anspruch 12, welche ferner ein Messer (26) zum Schneiden des extrudierten Mediums in Blöcke aufweist, wobei das Messer seitliche Rippen (40) aufweist, welche bezüglich der Richtung seiner Schneidbewegung zur Bereitstellung einer zusätzlichen Kompression für die geschnittenen Kanten ausgerichtet sind.

14. Vorrichtung nach Anspruch 12 oder 13, bei welcher die Former (35) in Längsrichtung sich verjüngende Nasen auf ihren Enden zur Kompression des Mediums an den Seitenwänden der Luftdurchgänge während der Extrusion aufweisen.

15. Vorrichtung nach einem der Ansprüche 12, 13 oder 14, bei welcher die Extrusionskammer ferner ein Dach (30, 36) aufweist, welches sich in Richtung der Extrusion aufwärts verjüngt und zur Steuerung der Dichte des Mediums einstellbar ist.

## Revendications

1. Milieu de culture en forme de bloc (1) ayant au moins un passage d'air (2) débouchant dans la base du bloc, caractérisé en ce que le passage d'air présente un tronçon étroit (14) et un tronçon supérieur (4) au-dessus du troncon étroit dont la largeur maximale (5) est supérieure à la largeur du tronçon étroit.

2. Milieu de culture en forme de bloc selon la revendication 1, dans lequel le tronçon supérieur (4) s'élargit vers l'extérieur en largeur à partir du dessus du tronçon étroit (14) jusqu'à la largeur maximale (5) et s'amincit de nouveau vers l'intérieur à partir de la largeur maximale.

3. Milieu de culture en forme de bloc selon la revendication 2, dans lequel la partie supérieure (9) de chaque passage est plate.

4. Milieu de culture en forme de bloc selon la revendication 1, 2 ou 3, dans lequel le passage d'air présente un tronçon inférieur (3) au-dessous du tronçon étroit.

5. Milieu de culture en forme de bloc selon la revendication 4, dans lequel le tronçon inférieur s'élargit vers l'extérieur en largeur à partir du tronçon étroit jusqu'à la surface inférieure du bloc.

6. Milieu de culture en forme de bloc selon l'une quelconque des revendications précédentes, dans lequel le bloc présente des bords découpés (11).

7. Milieu de culture en forme de bloc selon la revendication 6, dans lequel les bords découpés présentent des échancrures de compression (12) formées lors de la coupe.

8. Milieu de culture en forme de bloc selon l'une quelconque des revendications précédentes, dans lequel les côtés latéraux (10) du bloc présentent une structure rigide.

9. Milieu de culture en forme de bloc selon l'une quelconque des revendications précédentes, dans lequel le milieu de culture comprend de la paille, de la fiente de poulet et du mycélium.

10. Milieu de culture en forme de bloc selon l'une quelconque des revendications précédentes et étant formé par extrusion.

11. Procédé d'extrusion d'un milieu de culture en forme de bloc comprenant l'étape consistant à former au moins un passage d'air (2) débouchant dans la base du bloc, le passage comprenant un tronçon étroit (14) et un tronçon supérieur (4) au-dessus du tronçon étroit dont la largeur maximale (5) est supérieure à la largeur du tronçon étroit, en faisant passer le milieu dans une chambre d'extrusion (32) ayant au moins un dispositif de mise en forme agencé longitudinalement (35) présentant un tronçon étroit et un tronçon supérieur dont la largeur maximale est supérieure à la largeur du tronçon étroit, le dispositif de mise en forme étant fixé de manière adjacente au plancher (28) de la chambre d'extrusion.

12. Dispositif pour extruder un milieu de culture en forme de bloc comprenant au moins un passage d'air (2) débouchant dans la base du bloc, le passage présentant un tronçon étroit (14) et un tronçon supérieur (4) au-dessus du tronçon étroit dont la largeur maximale (5) est supérieure à la largeur du tronçon étroit, comprenant une chambre d'extrusion (32), au moins un dispositif de mise en forme (35) agencé longitudinalement présentant un tronçon étroit et un tronçon supérieur au-dessus du tronçon étroit dont la largeur maximale est supérieure à la largeur du tronçon étroit, le dispositif de mise en forme étant fixé adjacent au plancher (28) de la chambre d'extrusion, des moyens (34) pour amener le milieu de culture jusqu'à la chambre d'extrusion et des moyens (29) pour pousser le milieu dans la chambre.

13. Dispositif selon la revendication 13, comprenant en outre une lame (26) pour découper le milieu extrudé en blocs, la lame présentant des nervures latérales (40) alignées dans la direction de son mouvement de coupe pour fournir une compression supplémentaire aux bords découpés.

14. Dispositif selon la revendication 12 ou 13, dans lequel les dispositifs de mise en forme (35) présentent des becs amincis longitudinalement sur leurs extrémités pour comprimer le milieu au niveau des parois latérales des passages d'air pendant l'extrusion.

15. Dispositif selon la revendication 12, 13 ou 14, dans lequel la chambre d'extrusion comprend en outre un plafond (30, 36) qui s'écarte vers le haut dans la direction d'extrusion et peut être réglé pour contrôler la densité du milieu.
